# EUROPEAN PATENT APPLICATION

(11) **EP 4 390 072 A1**
(43) Date of publication of application: **26.06.2024**
(21) Application number: 22215992.3
(22) Date of filing: 22.12.2022
(51) Int. Cl.: F01N 3/26, F01N 3/20, F01N 5/02

(54) **FLUID REACTOR DEVICE, METHOD FOR OPERATING A FLUID REACTOR DEVICE, METHOD FOR MAINTAINING A FLUID REACTOR DEVICE AND METHOD FOR INSTALLING A FLUID REACTOR DEVICE**

(71) Applicant: MEGTEC Systems AB, 41666 Göteborg (SE)
(72) Inventor: KÄLLSTRAND, Åke, 41656 Göteborg (SE); POULSEN, Martin, 41666 Göteborg (SE)
(74) Representative: 2SPL Patentanwälte PartG mbB

(57) **Abstract**

A fluid reactor device, in particular a fluid purification device, is provided. The fluid reactor device includes a heat-transfer bed including heat storage material configured to heat fluid flowing through the heat storage material such that the fluid heats up and reacts while flowing through the heat storage material. The fluid reactor device further includes a heat source configured to heat the heat storage material to a predefined temperature. Additionally, the fluid reactor device further includes one or more hollow body arranged in the heat storage material. A respective interior of the one or more hollow body is accessible from outside the heat-transfer bed. At least part of the heat source is arranged in the one or more hollow body.

## Description

### Field

The present disclosure relates to reaction processing of fluids. In particular, examples of the present disclosure relate to a (regenerative) fluid reactor device, in particular to a (regenerative) fluid purification device, a method for operating a (regenerative) fluid reactor device, a method for maintaining a (regenerative) fluid reactor device and a method for installing a (regenerative) fluid reactor device.

### Background

Conventional systems for fluid reaction processing such as thermal oxidation systems comprise up to several heating elements to heat the heat-storage material in the heat-exchange bed. The heating elements are placed in a central position in the heat-exchange bed. When filling the heat-exchange bed, the heating elements are usually placed into the heat-storage material when the heat-exchange bed is half filled. Subsequently, the remaining heat-storage material is filled on top of the heating elements.

At least the upper half of the heat-storage material needs to be removed from the heat-exchange bed every time one needs to access one of the heating elements. For example, for inspection, maintenance or removal of one or more of the heating elements, at least the upper half of the heat-storage material needs to be removed from the heat-exchange bed. This causes a lot of efforts and is time consuming.

Hence, there may be a demand for improved reaction processing, in particular purification, of fluids such as exhaust gases.

### Summary

The demand may be satisfied by the subject-matter of the appended claims.

According to a first aspect, the present disclosure provides a (regenerative) fluid reactor device, in particular a (regenerative) fluid purification device. The fluid reactor device comprises a heat-transfer bed comprising heat storage material configured to heat fluid flowing through the heat storage material such that the fluid heats up and reacts while flowing through the heat storage material. The fluid reactor device further comprises a heat source configured to heat the heat storage material to a predefined temperature suitable for thermal reaction of the fluid. Additionally, the fluid reactor device comprises one or more hollow body arranged in the heat storage material. A respective interior of the one or more hollow body is accessible from outside the heat-transfer bed. At least part of the heat source is arranged in the one or more hollow body.

The heat source allows to initially heat the heat storage material to the predefined temperature, and to heat the heat storage material to the predefined temperature during reaction processing of the fluid if needed. The hollow body is a body, the interior (inner volume, inside) of which is hollow or unfilled. Furthermore, the hollow body is a body which comprises at least one opening for accessing the interior from the outside. The one or more hollow body are embedded in the heat storage material of the heat-transfer bed. The one or more hollow body provides an installation space for the heat source within the heat-transfer bed, which is accessible from the outside, in particular, the outside of the heat-transfer bed (e.g., via one or more corresponding opening in the heat-transfer bed). The one or more hollow body exhibits a certain (predefined) specific heat capacity and preferably a certain (predefined) heat transfer and/or transmission coefficient, which may be high and/or may be similar to the ones of the heat storage material, to enable efficient heat transport from the heat source to the heat storage material surrounding the one or more hollow body. The heat source may be arranged in part in the one or more hollow body. That is, in some examples, not all parts/components/elements of the heat source are arranged in the one or more hollow body. Alternatively, the heat source may be completely arranged in the one or more hollow body. That is, all parts/components/elements of the heat source are arranged in the one or more hollow body in some examples. In both cases, one or more supply lines such as supply lines for electrical energy, fuel or heat transfer media may be guided from the outside to the at least part of the heat source in the one or more hollow body.

Arranging at least part of the heat source in the one or more hollow body allows to easily access the heat source for inspection, maintenance, etc. In particular, arranging at least part of the heat source in the one or more hollow body allows to access the heat source without removing heat storage material from the heat-transfer bed. This not only may simplify inspection, maintenance, etc. of the heat source, but also reduce downtimes of the fluid reactor device since heat storage material need not be removed from the heat-transfer bed. Furthermore, arranging at least part of the heat source in the one or more hollow body may allow to facilitate the installation of the heat source.

According to examples of the present disclosure, the one or more hollow body may extend (substantially) perpendicular to a flow direction of the fluid through the heat storage material/heat-transfer bed. For example, the flow direction of the fluid through the heat storage material/heat-transfer bed may be (substantially) equal to a thickness direction of the heat storage material/heat-transfer bed. In other words, the one or more hollow body may extend (substantially) perpendicular to the thickness direction of the heat storage material/heat-transfer bed. The thickness direction of the heat storage material/heat-transfer bed may, e.g., extend from a first opening in the heat-transfer bed for entry and/or exit of the fluid/reacted fluid to a second opening in the heat-transfer bed for entry and/or exit of the fluid/reacted fluid. However, it is to be noted that the present disclosure is not limited thereto. In other examples, the one or more hollow body may extend at a non-zero angle to the flow direction of the fluid through the heat storage material/heat-transfer bed and/or the thickness direction of the heat storage material heat-transfer bed.

Furthermore, it is to be noted that the one or more hollow body may extend in a single (i.e., exclusively one) plane of the heat storage material/heat-transfer bed or in a plurality of different planes (i.e., two or more different planes) of the heat storage material/heat-transfer bed. For example, in case of multiple hollow bodies, a first part of the hollow bodies may be arranged in a first plane and a second part of the hollow bodies may be arranged in a second plane. The spatial extensions of the first plane and the second plane are different from each other. For example, the first plane and the second plane may be substantially parallel to each other but be distant from each other along the thickness direction of the heat storage material/heat-transfer bed. For example, the first plane and the second plane may be arranged (symmetrically or asymmetrically) around the central plane of the heat storage material/heat-transfer bed. The hollow bodies may, e.g., be arranged alternatingly in the first plane and the second plane. The number of planes and the arrangement patterns may be selected based on various criteria such as a desired (target) type of reaction of the fluid, properties of the fluid, properties of the heat-storage material, etc.

In some examples of the present disclosure, the at least part of the heat source is removably arranged in the one or more hollow body. In other words, the at least part of the heat source is arranged such in the one or more hollow body that it can be removed. That is, the at least part of the heat source is not permanently fixed to the one or more hollow body. Removably arranging at least part of the heat source in the one or more hollow body allows not only to easily access the heat source, but also to easily remove the heat source from the fluid reactor device for inspection, maintenance, etc. In particular, the heat source or parts thereof may be removed from the fluid reactor device without removing heat storage material from the heat-transfer bed.

The heat source may be implemented in various ways. According to some examples of the present disclosure, the heat source is an electrical heater. For example, the electrical heater may be one of the following: an electro-resistive heater (e.g., grid of electrical coils arranged in the one or more hollow body), an electro-magnetic heater (inductive heater), or an electrically driven radiation heater (e.g. an infrared, IR, emitter). The electrical heater allows to controllably heat the heat storage material. Furthermore, the electrical heater allows to use electricity from renewable sources for heating the heat storage material to the predefined temperature. One or more supply line for electrical energy may be provided (guided) from the outside of the heat-transfer bed to the at least part of the electrical heater in the one or more hollow body. In alternative examples of the present disclosure, the heat source is one of a combustion heater and a stream of hot (thermal) fluid. A combustion heater is a heater generating heat by combusting a fuel (e.g., natural gas or hydrogen). A combustion heater allows to controllably generate heat using a large variety of fuels. One or more supply line for fuel may be provided (guided) from the outside of the heat-transfer bed to the at least part of the combustion heater in the one or more hollow body. A stream of hot (thermal) fluid (such as thermal oil) is a heat transfer media that allows to transport heat from the outside of the heat-transfer bed to the inside of the heat-transfer bed for heating the heat transfer material. One or more supply line for hot (thermal) fluid may be provided (guided) from the outside of the heat-transfer bed to the one or more hollow body. For example, a reservoir of hot (thermal) fluid may be provided outside the heat-transfer bed and the volume flow of the stream of hot fluid to the one or more body may be controlled to heat the heat storage material to the predefined temperate. For example, the hot (thermal) fluid may be heated with waste heat (excess heat) from other (e.g., near-by) processes or devices (such as a process or device producing the fluid input to the fluid reactor device for reaction processing) to increase efficiency. Irrespective of the specific type of the heat source, the heat source may comprise one or more heating structure (elements, means, devices) arranged in the individual ones of the one or more hollow body. The one or more heating structure may be understood as sub-structures (sub-elements, sub-devices) of the heat source.

According to some examples of the present disclosure, the heat storage material comprises bulk heat storage material. In these examples, the one or more hollow body are one or more tube arranged in the bulk heat storage material. Bulk heat storage material is heat storage material, which is powdery, granular or lumpy in nature. In other words, the bulk heat storage material is packed (substantially) randomly in the heat-transfer bed and forms (substantially) irregular patterns. A tube is a hollow elongated object, which may but need not exhibit a cylindrical cross section. The housing of the tube may be continuous or perforated (e.g., mesh-like). Providing the one or more hollow body as one or more tube allows to provide an installation space for the at least part of the heat source in the bulk heat storage material.

In alternative examples of the present disclosure, the heat storage material comprises at least one layer of block shaped heat storage material such that recesses in at least part of the block shaped heat storage material form the one or more hollow body. Block shaped heat storage material is heat storage material, which is shaped as blocks, i.e., as compact solid forms (units) exhibiting a predefined shape such as honeycomb block. Already (Anyways) existing or dedicatedly formed recesses in the block shaped heat storage material allow to provide an installation space for the at least part of the heat source. In particular, the block shaped heat storage material may be stacked (packed) in a predefined manner to align the recesses in one or more of the blocks such that the one or more hollow body for the at least part of the heat source are formed. Due to the block shape of the heat storage material, the positioning and the shape of the recesses and, hence, the formed one or more hollow body remains unchanged (constant) over time. Therefore, the recesses in the block shaped heat storage material may further allow to directly arrange the at least part of the heat source in the recesses without any further protective measures (such as a protective cover or shape-stabilizing means for maintaining the shape of the recesses/one or more hollow body).

According to some examples of the present disclosure, the fluid reactor device further comprising one or more tube are arranged in at least part of the recesses forming the one or more hollow body. At least part of the heat source is arranged in the one or more tube. The one or more tube may serve different purposes. For example, the one or more tube may serve as a protective cover for the at least part of the heat source from the fluid flowing through the heat storage material for reaction processing. Alternatively or additionally, the one or more tube may allow for facilitated installation and/or removal as the at least part of the heat source may be slid in and/or moved out from the tube more easily than the recesses itself. In case the heat source is a stream of hot (thermal) fluid, the one or more tube allow to separate the stream of hot (thermal) fluid from the fluid flowing through the heat storage material for reaction processing. Accordingly, mixing of the two may be avoided. It is to be noted that one or more respective tube may be arranged in each hollow body, in which the at least part of the heat source is arranged. In other examples, one or more respective tube may be arranged only in part of the hollow bodies, in which the at least part of the heat source is arranged. That is, in some of the hollow bodies, in which the at least part of the heat source is arranged, no tube is arranged whereas in others there is one or more respective tube arranged.

In some examples of the present disclosure, at least one (e.g., all) of the one or more tube is formed of multiple pieces. In other words, at least one of the one or more tube is not integrally formed (i.e., is not formed into a single piece). Tubes of different (usually standardized) lengths are widely available. In case one or more tubes exhibiting a length different from the commercially available standard lengths is required or desired for accommodating the at least part of the heat source in the heat transfer bed, combining several standard length tube sections may be cheaper than producing or ordering one or more tube of the required or desired length. The tube sections may, e.g., be combined using standard tube connections (couplings).

According to some examples of the present disclosure, at least one (e.g., all) of the one or more tube is formed integrally. In other words, at least one of the one or more tube is formed into a single piece (i.e., is not formed by coupling or connecting multiple individual pieces or elements). Integrally formed tubes are commercially available in various lengths.

Furthermore, integrally formed tubes may be more stable and exhibit an improved fluid tightness compared to tubes formed of multiple pieces.

It is to be noted that in case of multiple hollow bodies a respective tube formed of multiple pieces may be used for a first part of the hollow bodies and that a respective integrally formed tube may be used for a second part of the hollow bodies. Furthermore, it is to be noted that tubes formed of multiple pieces and integrally formed tubes may be used for both cases described above: a) the one or more tube forming the one or more hollow body and b) the one or more tube being arranged in at least part of the recesses forming the one or more hollow body.

In some examples of the present disclosure, the heat-transfer bed comprises a thermally insulating wall surrounding the heat storage material. In these examples, the one or more tube are held at or in the thermally insulating wall. In other words, the thermally insulating wall bears (supports) the one or more tube. For example, the one or more tube may be held in or at the thermally insulating wall by corresponding fastening structures (means, devices) and/or by inserting the one or more tube into the thermally insulating wall. The thermally insulating wall may allow to minimize heat losses over the heat-transfer bed. Furthermore, holding the one or more tube at or in the thermally insulating wall may allow to maintain a positioning of the one or more tube within the heat-transfer bed.

According to some examples of the present disclosure, a first end of at least one of the one or more tube is held at or in a first part of the thermally insulating wall. A second end of the at least one of the one or more tube is held at or in a second part of the thermally insulating wall. The first end is opposite to the second end. In other words, at least one of the one or more tube is held at or in opposite parts of the thermally insulating wall such as opposite side walls of the thermally insulating wall. As the thermally insulating wall bears both ends of the at least one of the one or more tube, the positioning of the at least one tube within the heat-transfer bed is safely maintained. Furthermore, both ends may be accessed through the thermally insulating wall. For example, the respective first end of all of the one or more tube and the respective second end of all of the one or more tube may be held at or in the thermally insulating wall.

In alternative examples of the present disclosure, a first end of at least one of the one or more tube is held at or in the thermally insulating wall. A second end of the at least one of the one or more tube is a free end not held at or in the thermally insulating wall. The first end is again opposite to the second end. The thermally insulating wall bearing only one end of the at least one of the one or more tube may be sufficient for keeping the at least one tube in place. As only one end is held, installation of the at least one tube may be facilitated. For example, the respective first end of all of the one or more tube may be held at or in the thermally insulating wall and the respective second end of all of the one or more tube may be a free end not held at or in the thermally insulating wall.

According to some examples of the present disclosure, the one or more hollow body are arranged in a central plane of the heat-transfer bed. As described above, the thickness direction of the heat storage material/heat-transfer bed may, e.g., extend from a first opening in the heat-transfer bed for entry and/or exit of the fluid/reacted fluid to a second opening in the heat-transfer bed for entry and/or exit of the fluid/reacted fluid. Accordingly, the extension of the heat-transfer bed along the thickness direction defines the thickness of the heat-transfer bed. The central plane of the heat-transfer bed is a plane extending perpendicular to the thickness direction of the heat storage material/heat-transfer bed and, hence, the flow direction of the fluid through the heat storage material/heat-transfer bed. The central plane is located at (approx.) 50 % of the thickness of the heat-transfer bed, i.e., in the center of the heat-transfer bed. Providing the one or more hollow body and, hence, the at least part of the heat source, in the center of the heat-transfer bed allows to cause the fluid to react in an inner (central) zone or area of the heat storage material /heat-transfer bed. The inner zone or area (which includes the central plane) may be understood as a reaction zone or area within the heat-transfer bed. However, the one or more hollow body need not be placed exactly in the center plane. In alternative examples, the one or more hollow body may be arranged in a region between 25 % and 75 % (30 % and 70 %, 35 % and 65 %, 40 % and 60 % or 45 % and 55 %) of a thickness of the heat-transfer bed. That is, a respective perpendicular distance of the one or more hollow body to the central plane is 25 % (20 %, 15 %, 10 % or 5 %) or less of the thickness of the of the heat-transfer bed. On the other hand, a respective perpendicular distance of the one or more hollow body to the nearest one of the first opening and the second is 25 % (30 %, 35 %, 40 % or 45 %) or more of the thickness of the of the heat-transfer bed. In other words, the one or more hollow body may be arranged around/near the central plane. For example, in case of plural hollow bodies, the hollow bodies may be arranged (e.g., alternatingly) in different planes in the region between 25 % and 75 % of the thickness of the heat-transfer bed.

In some examples of the present disclosure, one or more opening are formed in a thermally insulating wall surrounding the heat storage material. At least one of the one or more hollow body and/or one or more tube arranged in at least part of the one or more hollow body extends through the one or more opening such that the interior of the at least one of the one or more hollow body and/or the one or more tube arranged in at least part of the one or more hollow body is/are accessible from the outside of the heat-transfer bed. However, the one or more hollow body and/or one or more tube need not extend through the one or more opening to the outside of the heat-transfer bed. At least one of the one or more hollow body and/or one or more tube arranged in at least part of the one or more hollow body may be accessible via the one or more opening. For example, at least one of the one or more hollow body and/or one or more tube arranged in at least part of the one or more hollow body may extend into the one or more opening or be coupled (connected) to the one or more opening in the thermally insulating wall such that the interior of the respective hollow body or tube is accessible from the outside of the heat-transfer bed via the respective opening. The one or more tube may be held at or in the thermally insulating wall accordingly.

According to some examples of the present disclosure, the one or more opening is reversibly sealed with heat insulating material. The heat insulating material is a material that reduces the heat transfer between the two volumes separated by the heat insulating material. For example, the heat insulating material sealing the one or more opening reduces the heat transfer between the interior of the heat-transfer bed and the outside of the heat-transfer bed. Accordingly, heat loses over the one or more opening may be avoided or at least reduced. As the one or more opening is reversibly sealed with heat insulating material, the heat insulating material may be removed for maintenance work, etc. such that the at least part of the heat source inside the hollow body may be easily accessed by a service technician via the one or more opening. Alternatively or additionally, a respective end of the one or more hollow body extending through or being accessible via the one or more opening may be reversibly sealed with heat-insulating material. Analogously to what is described above, heat losses over the respective end of the one or more hollow body may be avoided and easy access for maintenance work, etc. may be ensured. Further alternatively or additionally, the one or more tube arranged in at least part of the one or more hollow body and extending through the one or more opening may be reversibly sealed with heat-insulating material. Analogously to what is described above, heat losses over a respective end of or opening in the one or more tube may be avoided and easy access for maintenance work, etc. may be ensured.

According to some examples of the present disclosure, the fluid reactor device further comprises a first plenum fluidly coupled to a first opening of the heat-transfer bed, and a second plenum fluidly coupled to a second opening of the heat-transfer bed. The first plenum and the second plenum are configured to alternatingly supply the fluid to the heat-transfer bed such that the fluid heats up and reacts while flowing through the heat storage material. Further, during a time period in which one of the first plenum and the second plenum is configured to supply the fluid to the heat-transfer bed, the other one of the first plenum and the second plenum is configured to drain the reacted fluid from the heat-transfer bed. The periodic reversion of the flow direction of the fluid through the heat storage material may allow to maintain a high heat exchange efficiency of the heat storage material (e.g., higher than 95 %). Accordingly, the fluid reactor device may recover substantially all the heat needed for sustaining a needed reaction temperature in the heat-transfer bed (e.g., an oxidation temperature or a reduction temperature). Accordingly, the fluid reactor device may be understood as a regenerative fluid reactor device.

In some examples of the present disclosure, the heat-transfer bed comprises a thermally insulating wall surrounding the heat storage material and extending between the first plenum and the second plenum. In these examples, the first opening and the second opening are formed in the thermally insulating wall. The thermally insulating wall may allow to minimize heat losses over the heat-transfer bed.

According to some examples of the present disclosure, a housing of the first plenum is at least partly formed of and/or is at least partly covered by a heat-insulating material. The heat-insulating material may allow to minimize heat loses over the housing of the first plenum. Analogously or alternatively, the housing of the second plenum may at least partly be formed of and/or at least partly be covered by a heat-insulating material to minimize heat loses over the housing of the second plenum.

In some examples of the present disclosure, catalyst material for lowering a reaction temperature of fluid is arranged within the heat-transfer bed. Due to the catalyst material, the needed temperature for the reaction of the fluid may be lowered such that the fluid reactor device may operate at lower temperatures.

According to some examples of the present disclosure, the fluid reactor device comprises one or more test fluid port (test fluid inlet) configured to receive a pressurized test fluid and supply the pressurized test fluid to the interior of the fluid reactor device. The pressurized test fluid allows to test whether the interface(s) between the one or more hollow body and the heat-transfer bed is/are fluid-tight. For example, an overpressure of the test fluid in the interior of the fluid reactor device may be achieved compared to the environment of the fluid reactor device for the leakage measurement. It is to be noted that the injection of the pressurized test fluid to the interior of the fluid reactor device further allows to test the fluid-tightness of the other components (e.g., the housing) of the fluid reactor device. The pressurized test fluid may be a pressurized gas such as pressurized air.
According to a second aspect, the present disclosure provides a method for operating the above fluid reactor device. The method comprises heating the heat storage material by the heat source to a predefined temperature such that fluid flowing through the heat storage material heats up and reacts while flowing through the heat storage material.

The proposed method allows to initially heat the heat storage material to the predefined temperature suitable for thermal reaction of the fluid, and to heat the heat storage material to the predefined temperature during reaction processing of the fluid if needed. Arranging at least part of the heat source in the one or more hollow body allows to easily access the heat source for inspection, maintenance, etc. In particular, arranging at least part of the heat source in the one or more hollow body allows to access the heat source without removing heat storage material from the heat-transfer bed. This not only may simplify inspection, maintenance, etc. of the heat source, but also reduce downtimes of the fluid reactor device since heat storage material need not be removed from the heat-transfer bed. Furthermore, arranging at least part of the heat source in the one or more hollow body may allow to facilitate the installation of the heat source.

According to a third aspect, the present disclosure provides a method for installing the above fluid reactor device. The method comprises providing the heat-transfer bed with the one or more hollow body arranged in the heat storage material of the heat-transfer bed. Additionally, the method comprises arranging at least part of the heat source in the one or more hollow body.

As the one or more hollow body are arranged in the heat storage material of the heat-transfer bed, the at least part of the heat source may simply be inserted into the one or more hollow body from the outside of the heat-transfer bed. In particular, the at least part of the heat source may be installed without removing heat storage material from the heat-transfer bed. This can simplify and speed up the installation of the fluid reactor device.

In some examples of the present disclosure, one or more opening are formed in a thermally insulating wall surrounding the heat storage material. At least one of the one or more hollow body extends through the one or more opening and/or at least one of the one or more hollow body is accessible via the one or more opening. In these examples, the method further comprises reversibly sealing, with heat-insulating material, the one or more opening and/or a respective end of the one or more hollow body extending through or being accessible via the one or more opening. Analogously to what is described above, heat losses over the respective opening or a respective end of the one or more hollow body may be avoided and easy access for maintenance work, etc. may be ensured.

According to some examples of the present disclosure, the method further comprises performing a leakage test (sealing test, tightness test) after arranging at least part of the heat source in the one or more hollow body. The leakage test allows to test whether the interface(s) between the one or more hollow body and the heat-transfer bed is/are fluid-tight, i.e., whether an inside volume (interior) of the fluid reactor device (heat-transfer bed) is sealed against an environment (outside) of the fluid reactor device (heat-transfer bed). The leakage test may, e.g., comprise injecting a pressurized test fluid to the interior of the fluid reactor device (e.g., via a respective test fluid port in the heat-transfer bed or another part of the fluid reactor device as described above), and measuring whether the test fluid leaks from the interface(s) between the one or more hollow body and the heat-transfer bed. It is to be noted that the injection of the pressurized test fluid to the interior of the fluid reactor device further allows to test the fluid-tightness of the other components (e.g., the housing) of the fluid reactor device. As described above, the pressurized test fluid may be a pressurized gas such as pressurized air.

According to a fourth aspect, the present disclosure provides a method for maintaining the above fluid reactor device. The method comprises removing at least part of the heat source from the one or more hollow body for maintenance. Additionally, the method comprises arranging, in the one or more hollow body, the at least part of the heat source in the one or more hollow body after maintenance or at least part of a replacement heat source.

For example, the at least part of the heat source may be moved (e.g., pulled) out from the one or more hollow body for maintenance. After maintenance, either the maintained (e.g., checked and repaired) at least part of the heat source is moved back into the one or more hollow body or at least part of a replacement heat source is moved instead into the one or more hollow body. As the one or more hollow body are arranged in the heat storage material of the heat-transfer bed, the removal and the (re-)insertion may be performed without removing heat storage material from the heat-transfer bed. This can simplify and speed up the maintenance of the fluid reactor device.

In some examples of the present disclosure, the method further comprises performing maintenance work on the at least part of the heat source. The maintenance work may be manifold. For example, the maintenance work may comprise checking (testing), at least partly dismantling, repairing, upgrading and/or purifying (cleaning) the at least part of the heat source.

According to some examples of the present disclosure, one or more opening are formed in a thermally insulating wall surrounding the heat storage material. At least one of the one or more hollow body extends through the one or more opening and/or at least one of the one or more hollow body is accessible via the one or more opening. In these examples, the method further comprises removing heat-insulating material from at least one of the one or more opening and/or a respective end of at least one of the one or more hollow body extending through or being accessible via the one or more opening before removing the at least part of the heat source from the one or more hollow body. Alternatively or additionally, the method comprises reversibly sealing, with heat-insulating material, at least one of the one or more opening and/or a respective end of at least one of the one or more hollow body extending through or being accessible via the one or more opening after arranging the at least part of the heat source or the replacement heat source in the one or more hollow body. Analogously to what is described above, heat losses over the respective opening or a respective end of the one or more hollow body may be avoided and easy access for maintenance work, etc. may be ensured.

In some examples of the present disclosure, the method further comprises performing a leakage test (sealing test, tightness test) after arranging, in the one or more hollow body, the at least part of the heat source in the one or more hollow body after maintenance or at least part of the replacement heat source. The leakage test allows to test whether the interface(s) between the one or more hollow body and the heat-transfer bed is/are fluid-tight, i.e., whether an inside volume (interior) of the fluid reactor device (heat-transfer bed) is sealed against an environment (outside) of the fluid reactor device (heat-transfer bed). The leakage test may, e.g., comprise injecting a pressurized test fluid to the interior of the fluid reactor device (e.g., via a respective test fluid port in the heat-transfer bed or another part of the fluid reactor device as described above), and measuring whether the test fluid leaks from the interface(s) between the one or more hollow body and the heat-transfer bed. It is to be noted that the injection of the pressurized test fluid to the interior of the fluid reactor device further allows to test the fluid-tightness of the other components (e.g., the housing) of the fluid reactor device. As described above, the pressurized test fluid may be a pressurized gas such as pressurized air.

### Brief description of the Figures

Some examples of apparatuses and/or methods will be described in the following by way of example only, and with reference to the accompanying figures, in which
Fig. 1 schematically illustrates a first example of a fluid reactor device;
Fig. 2 schematically illustrates a second example of a fluid reactor device;
Fig. 3 illustrates a sectional view of a third example of a fluid reactor device;
Fig. 4 schematically illustrates a fourth example of a fluid reactor device;
Fig. 5 illustrates a flowchart of an example of a method for operating a fluid reactor device as described herein;
Fig. 6 illustrates a flowchart of an example of a method for installing a fluid reactor device as described herein; and
Fig. 7 illustrates a flowchart of an example of a method for maintaining a fluid reactor device as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

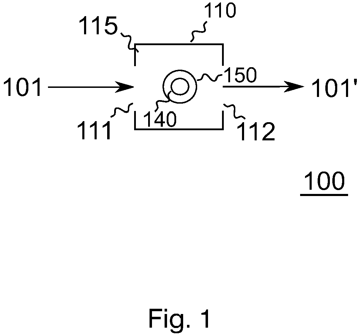

**Fig. 1** schematically illustrates a fluid reactor device 100 for causing a fluid 101 to react. The fluid reactor device 100 causes at least part of the fluid 101 to react such that a reacted fluid 101' (i.e., the fluid after undergoing the reaction) is obtained.

The fluid 101 may be or comprise one or more gaseous components (substances, ingredients), one or more vapor components (substances, ingredients), one or more liquid components (substances, ingredients), and/or mixtures thereof. According to examples of the present disclosure, the fluid 101 may comprise exclusively gaseous components or substances. For example, the fluid 101 may be an exhaust gas or an exhaust air, wherein an exhaust air contains a higher proportion of oxygen compared to an exhaust gas.

The type of reaction is not limited. In particular, the fluid reactor device 100 may be a fluid purification device for purifying the fluid 101. In case the fluid reactor device 100 is a fluid purification device, the fluid purification device removes one or more ingredient or reactant from the fluid 101 by reaction processing for purifying the fluid. The one or more ingredient or reactant may be understood as one or more impurity and/or one or more pollutant. An impurity may be understood in this context as a substance (ingredient, reactant) in the fluid 101 that is not included in a desired (target) composition of the fluid 101. A pollutant may be understood in this context as a substance (ingredient, reactant) that harms systems, animals, humans and/or the environment when occurring in a specific quantity or concentration (e.g., defined as mass of the pollutant per unit volume of the fluid 101 or as number of pollutant particles per unit volume of the fluid 101). One or more impurity or pollutant contained in the fluid 101 may be combustible. In other words, the fluid 101 may comprises one or more combustible ingredient or reactant. For example, organic and/or inorganic impurities or pollutants may be removed from the fluid 101 by the fluid purification device. The organic and/or inorganic impurities or pollutants may, e.g., be VOCs, solvents, nitrogen oxides (NOₓ), methane (CH₄), sulfur oxides (SOₓ), hydrogen fluoride (HF), ammonia (NH₃), hydrogen chloride (HCl), dioxins, furans or pollutants of the basic structure CₓH_{y}O_{z} (C denotes carbon; H denotes hydrogen; O denotes oxygen; x, y, and z are natural numbers).

The fluid reactor device 100 comprises a (e.g., single, i.e., exactly/only one) heat-transfer bed 110. The heat-transfer bed 110 comprises (e.g., is filled with) heat storage material (heat transfer material) 115. The heat storage material 115 is material capable of storing and releasing heat. The heat storage material exhibits a certain (predefined) specific heat capacity and preferably a certain (predefined) heat transfer and/or transmission coefficient. For example, the heat storage material 115 may comprise or be ceramic material such as alumina porcelain, mullite, fireclay (chamotte), cordierite, zircon or a mixture thereof. However, the present disclosure is not limited thereto. Other types of ceramic material may be used as well. In some examples, the heat storage material 115 may alternatively or additionally comprise or be concrete, stone, rock, metallic material or a mixture thereof. The heat storage material 115 may be packed structured or randomly in the heat-transfer bed 110 to form regular or irregular patterns (e.g., ceramic honeycombs, ceramic saddles or the like may be used). For example, the heat storage material 115 may comprise (e.g., exclusively) block shaped heat storage material, (e.g., exclusively) bulk heat storage material or combinations thereof. The heat storage material 115 is configured to heat the fluid 101 such that the fluid 101 heats up and reacts while flowing through the heat storage material 115. Openings 111 and 112 are formed in the heat-transfer bed 110. The openings 111 and 112 are configured to allow the fluid 101 to enter the heat-transfer bed 110, and are further configured to allow the reacted fluid 101' to exit (leave) the heat-transfer bed 110.

The flow direction of the fluid 101 through the heat storage material 115 may be constant (stable) over time as indicated in Fig. 1. In other examples, the flow direction of the fluid 101 through the heat storage material 115 may at least once be reversed over time (e.g., periodically or aperiodically).

Additionally, the fluid reactor device 100 comprises a heat source 140 configured to heat the heat storage material 115 to a predefined temperature suitable for thermal reaction of the fluid 101. For example, the predefined temperature may be more than approx. 600 °C, 800 °C or 1000 °C. The heat source 140 may, e.g., be configured (used) to initially heat the heat storage material 115 to the predefined temperature (e.g., after start-up of the fluid reactor device 100). Additionally, the heat source 140 may, e.g., be configured (used) to heat the heat storage material 115 during reaction processing of the fluid 101 if needed (e.g., to maintain the predefined temperature in the heat-transfer bed). Different implementations of the heat source 140 are possible. For example, the heat source 140 may be an electrical heater, combustion heater or a stream of hot (thermal) fluid.

The fluid reactor device 100 further comprises one or more hollow body 150 arranged (embedded) in the heat storage material 115. A respective interior of the one or more hollow body 150 is accessible from outside the heat-transfer bed 110. The one or more hollow body 150 exhibits a certain (predefined) specific heat capacity and preferably a certain (predefined) heat transfer and/or transmission coefficient, which may be high and/or may be similar to the ones of the heat storage material 110, to enable efficient heat transport from the heat source 140 to the heat storage material 110 surrounding the one or more hollow body 150.

At least part of the heat source 140 is arranged in the one or more hollow body 150. For example, the heat source 140 may be arranged in part in the one or more hollow body 150. That is, in some examples, not all parts/components/elements of the heat source 140 are arranged in the one or more hollow body 150. Alternatively, the heat source 140 may be completely arranged in the one or more hollow body 150. That is, all parts/components/elements of the heat source 140 are arranged in the one or more hollow body 150 in some examples. In both cases, one or more supply line (not illustrated in Fig. 1) such as supply lines for electrical energy, fuel or heat transfer media may be guided from the outside of the heat-transfer bed 110 (fluid reaction device 100) to the at least part of the heat source 140 in the one or more hollow body 150.

Although exactly one hollow body 150 is illustrated in Fig. 1, it is to be noted that a plurality of hollow bodies (i.e., N > 2) may be arranged in the heat storage material 115. Accordingly, sub-elements of the at least part of the heat source 140 may be arranged in the different hollow bodies. For example, if the heat source 140 is a grid of electrical coils, sub-sets of the electrical coils may be arranged in the various hollow bodies. Similarly, if the heat source 140 is an IR heater, one or more IR emitter may be arranged in each of the various hollow bodies. In case of a combustion heater, one or more combustion structures (elements, means, devices) may be arranged in each of the various hollow bodies.

The one or more hollow body 150 provides an installation space for the heat source 140 within the heat-transfer bed 110, which is accessible from the outside, in particular, the outside of the heat-transfer bed 110 (e.g., via one or more corresponding opening in the heat-transfer bed). Arranging at least part of the heat source 140 in the one or more hollow body 150 allows to easily access the heat source 140 for inspection, maintenance, etc. In particular, arranging at least part of the heat source 140 in the one or more hollow body 150 allows to access the heat source 140 without removing heat storage material 115 from the heat-transfer bed 110. This not only may simplify inspection, maintenance, etc. of the heat source 140, but also reduce downtimes of the fluid reactor device 100 since heat storage material 115 need not be removed from the heat-transfer bed 110. Furthermore, arranging at least part of the heat source 140 in the one or more hollow body 150 may allow to facilitate the installation of the heat source 140.

The at least part of the heat source 140 may be removably arranged in the one or more hollow body 115 such that it can be removed. That is, the at least part of the heat source 140 is not permanently fixed to the one or more hollow body 150. Removably arranging at least part of the heat source 140 in the one or more hollow body 150 allows not only to easily access the heat source 140, but also to easily remove the heat source 140 from the fluid reactor device 100 for inspection, maintenance, etc. In particular, the heat source 140 or parts thereof may be removed from the fluid reactor device 100 without removing heat storage material 115 from the heat-transfer bed 100.

In the example of Fig. 1, the one or more hollow body 150 extends (substantially) perpendicular to the flow direction of the fluid 101 through the heat storage material 115/heat-transfer bed 110. The flow direction of the fluid 101 through the heat storage material 115/heat-transfer bed 110 is (substantially) equal to a thickness direction of the heat storage material 115/heat-transfer bed 110. The thickness direction of the heat storage material 115/heat-transfer bed 110 extends from the first opening 111 to the second opening 112. Accordingly, the one or more hollow body 150 extends (substantially) perpendicular to the thickness direction of the heat storage material 115/heat-transfer bed 110. However, it is to be noted that the present disclosure is not limited thereto. In other examples, the one or more hollow body 150 may extend at a non-zero angle to the flow direction of the fluid 101 through the heat storage material 115/heat-transfer bed 110 and/or the thickness direction of the heat storage material 115/heat-transfer bed 110.

In case plural hollow bodies are arranged in the heat storage material 115, the hollow bodies may extend in a single (i.e., exclusively one) plane of the heat storage material 115/heat-transfer bed 110 or in a plurality of different planes (i.e., two or more different planes) of the heat storage material 115/heat-transfer bed 110. For example, all hollow bodies may be arranged in the central plane of the heat storage material 115/heat-transfer bed 110. In other examples, a first part of the hollow bodies may be arranged in a first plane and a second part of the hollow bodies may be arranged in a second plane, which is different from the first plane. The number of planes and the arrangement patterns may be selected based on various criteria such as a desired (target) type of reaction of the fluid, properties of the fluid, properties of the heat-storage material, etc.

In the following, a plurality of more detailed fluid reactor devices will be described with reference to the figures to highlight further aspects of the present disclosure.

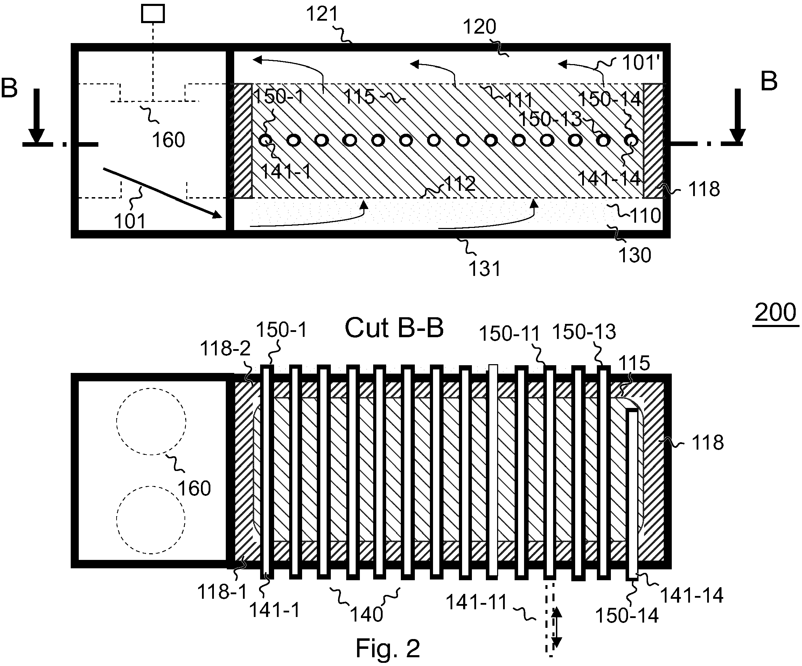

**Fig. 2** schematically illustrates another fluid reactor device 200. The upper part of Fig. 2 illustrates a sectional view of the fluid reactor device 200. The lower part of Fig. 2 illustrates another sectional view of the fluid reactor device 200 along the sectional line B-B illustrated in the upper part of Fig. 2.

The fluid reactor device 200 comprises a (e.g., single, i.e., exactly/only one) heat-transfer bed 110. The heat-transfer bed 110 comprises (e.g., is filled with) exclusively (only) bulk heat storage material (heat transfer material) 115.

The heat-transfer bed 110 comprises a thermally insulating wall 118 surrounding the heat storage material 115. A first opening 111 and a second opening 112 are formed in the thermally insulating wall 118. A first plenum 120 is attached to the first opening 111 of the heat-transfer bed 110, and a second plenum 130 is attached to the second opening 112 of the heat-transfer bed 110. The first opening 111 and the second opening 112 are arranged on opposite sides of the heat-transfer bed 110 such that the thermally insulating wall 118 extends between the first plenum 120 and the second plenum 130. In other examples, at least one of the first plenum 120 and the second plenum 130 need not be directly attached to the first and second openings 111 and 112. For example, one or more intermediate elements or a (temporary) bypass may be coupled between at least one of the first plenum 120 and the second plenum 130 and the first and second openings 111 and 112. In general, the first plenum 120 is fluidly coupled to the first opening 111, and the second plenum 130 is fluidly coupled to the second opening 112.

The first plenum 120 and the second plenum 130 are configured to alternatingly supply the fluid 101 to the heat-transfer bed 110 such that the fluid 101 heats up and reacts while flowing through the heat storage material 115. It is to be noted that all components of the fluid 101 or only part of the components of the fluid 101 may react. In other words, at least one component of the fluid 101 reacts while flowing through the heat storage material 115. That is, the fluid 101 may comprise one or more reactive component which reacts while flowing through the heat storage material 115 and one or more non-reactive component which does not react while flowing through the heat storage material 115. For example, the fluid 101 may be heated up and be subject to an oxidation process or a reduction process while flowing through the heat storage material 115. The fluid 101 may, e.g., comprise an exhaust air being a mixture of air (or a near air-like gas mixture) and at least one combustible (such as a VOC or the like). In this example, the VOC reacts with the air's oxygen while flowing through the heat storage material 115, whereas other components of the fluid 101 do not take part in the reaction. The heat storage material 115 is configured to store heat released by the fluid 101 during and/or after the reaction. For example, the reaction may take place in an inner (central) zone or area of the heat storage material 115/heat-transfer bed 110. The inner zone or area may be understood as a reaction zone or area within the heat-transfer bed 110. The inner zone or area is located at or near a center plane of the heat-transfer bed 110 and/or may oscillate around center plane of the heat-transfer bed 110. In the example of Fig. 2, the central plane extends along the intersection line B-B perpendicular to the drawing plane and, hence, perpendicular to the flow direction of the fluid 101 through the heat storage material 115/heat-transfer bed 110 (which is equal to the thickness direction of the heat storage material 115/heat-transfer bed 110).

During a time period in which one of the first plenum 120 and the second plenum 130 is configured to supply the fluid 101 to the heat-transfer bed 110, the other one of the first plenum 120 and the second plenum 130 is configured to drain the reacted fluid 101' (i.e., the fluid after undergoing the reaction) from the heat-transfer bed 110. Accordingly, a flow direction of the fluid 101 through the heat storage material 115 is periodically reversed (e.g., every 90 to 120 seconds).

Fig. 2 illustrates the fluid reactor device 200 during a time period in which the second plenum 130 is configured to supply the fluid 101 to the heat-transfer bed 110 and the first plenum 120 is configured to drain the reacted fluid 101' from the heat-transfer bed 110. Accordingly, the fluid 101 flows from the bottom to the top of the heat-transfer bed 110 through the heat storage material 115. Heat energy previously stored in the bottom part of the heat storage material 115 is used to heat up the fluid 101 and causes the fluid 101 to react. The heat storage material 115 at the top part recovers the heat energy from the reacted fluid 101'. For example, as the fluid 101 passes from the bottom part to the top part of the heat storage material 115, VOCs in the fluid 101 may get hot enough to undergo thermal oxidation to water vapor and carbon dioxide.

During a time period in which the first plenum 120 is configured to supply the fluid 101 to the heat-transfer bed 110, the fluid flow is reversed. That is, while the first plenum 120 is configured to supply the fluid 101 to the heat-transfer bed 110, the second plenum 130 is configured to drain the reacted fluid 101' from the heat-transfer bed 110. Accordingly, the fluid 101 flows from the top to the bottom of the heat-transfer bed 110 through the heat storage material 115. Heat energy previously stored in the top part of the heat storage material 115 is used to heat up the fluid 101 and causes the fluid 101 to react. The heat storage material 115 at the bottom part recovers the excess heat energy from the reacted fluid 101'.

The periodic reversion of the flow direction of the fluid 101 through the heat storage material 115 may allow to maintain a high heat exchange efficiency of the heat storage material 115 (e.g., higher than 95 %). Accordingly, the fluid reactor device 200 may recover substantially all the heat needed for sustaining a needed reaction temperature in the heat-transfer bed 110 (e.g., an oxidation temperature or a reduction temperature). Accordingly, the fluid reactor device 200 may be understood as a regenerative fluid reactor device. For example, irrespective of the flow direction of the fluid 101 through the heat storage material 115, a temperature of the reacted fluid 101' may be less than 100 °C higher than that of the fluid 101 supplied to the heat-transfer bed 110 (e.g., the temperature may be only 20 °C to 50 °C higher). Further, the periodic reversion of the flow direction of the fluid 101 may allow to maintain a predetermined temperature profile of the heat-transfer bed 110 along the extension of the heat-transfer bed 110 between the first plenum 110 and the second plenum 120 (i.e., along the vertical extension of the heat-transfer bed in the example of Fig. 2). In particular, the periodic reversion of the flow direction of the fluid 101 may allow to keep the hottest zone near the center plane of the heat-transfer bed 110 along the extension of the heat-transfer bed 110 between the first plenum 110 and the second plenum 120. In other words, the hottest zone may substantially be the inner zone or area of the heat storage material 115/heat-transfer bed 110.

During operation of the fluid reactor device 200, the heat storage material 115 may exhibit a predefined temperature suitable for thermal reaction of the fluid 101. For example, the predefined temperature may be more than approx. 600 °C, 800 °C or 1000 °C. The fluid reactor device 200 comprises a heat source 140 configured to heat the heat storage material 115 to the predefined temperature. The heat source 140 allows to initially heat the heat storage material 115 to the predefined temperature (e.g., after start-up of the fluid reactor device 200). Additionally, the heat source 140 allows to heat the heat storage material 115 during reaction processing of the fluid 101 if needed (e.g., to maintain the predefined temperature in the heat-transfer bed). For example, the heat source 140 may be an electrical heater, combustion heater or a stream of hot (thermal) fluid. In the example of Fig. 2, the heat source 140 comprises 14 heating structures (elements, means, devices) 141-1, ..., 141-14. However, it is to be noted that any other number M ≥ 1 of heating structures may be used as well. The heating structures 141-1, ..., 141-14 are sub-elements of the heat source 140. For example, in case the heat source 140 is an electrical heater, the heating structures 141-1, ..., 141-14 may be or comprise electrical coils, IR emitters, electro-magnetic heaters. In case the heat source 140 is a combustion heater, the heating structures 141-1, ..., 141-14 may be or comprise fuel burners. In case the heat source 140 is a stream of hot (thermal) fluid, the heating structures 141-1, ..., 141-14 may be sub-streams of the stream of hot (thermal) fluid. Although not explicitly illustrated in Fig. 2, one or more supply line for the respective one of electrical energy, fuel and hot (thermal) fluid may be guided to the respective heating structure 141-1, ..., 141-14.

The heating structures 141-1, ..., 141-14, i.e., the heat source 140, are/is not arranged directly in the bulk heat storage material 115. The heating structures 141-1, ..., 141-14, i.e., the heat source 140, are/is arranged in 14 hollow bodies 150-1, ..., 150-14. The hollow bodies 150-1, ..., 150-14 are arranged in the heat storage material such that their respective interior is accessible from outside the heat-transfer bed 110. In the example of Fig. 2, the hollow bodies 150-1, ..., 150-14 are tubes arranged (embedded) in the bulk heat storage material 115. The respective tube may be formed of multiple pieces or be formed integrally.

Arranging the heating structures 141-1, ..., 141-14, i.e., the heat source 140, in the hollow bodies 150-1, ..., 150-14 allows to easily access the heat source 140 for inspection, maintenance, etc. In particular, arranging the heating structures 141-1, ..., 141-14 in the hollow bodies 150-1, ..., 150-14 allows to access the heating structures 141-1, ..., 141-14 without removing heat storage material 115 from the heat-transfer bed 100. This not only may simplify inspection, maintenance, etc. of the heat source 140, but also reduce downtimes of the fluid reactor device 200 since the heat storage material 115 need not be removed from the heat-transfer bed 110. Furthermore, arranging the heating structures 141-1, ..., 141-14 in the hollow bodies 150-1, ..., 150-14 may allow to facilitate the installation of the heat source 140.

In the example of Fig. 2, the tubes forming the hollow bodies 150-1, ..., 150-14 are held in the thermally insulating wall 118 to define and maintain the positioning of the hollow bodies 150-1, ..., 150-14 and, hence, the heating structures 141-1, ..., 141-14 in the heat storage material 115. Two options for holding the hollow bodies 150-1, ..., 150-14 are exemplarily illustrated in Fig. 2. The first option is illustrated for the tubes forming the hollow bodies 150-1, ..., 150-13, the second option is illustrated for the tube forming the hollow body 150-14.

A respective first end of the tubes forming the hollow bodies 150-1, ..., 150-13 is held in a first part 118-1 of the thermally insulating wall 118. A respective second end of the tubes forming the hollow bodies 150-1, ..., 150-13 is held in a second part 118-2 of the thermally insulating wall 118. The respective first end is opposite to the respective second end. In other words, the ends of the tubes forming the hollow bodies 150-1, ..., 150-13 are held in opposite parts 118-1 and 118-2 of the thermally insulating wall 118. On the other hand, only the first end of the tube forming the hollow body 150-14 is held in the thermally insulating wall 118. The second end of the tube forming the hollow body 150-14 is a free end not held at or in the thermally insulating wall 118. Both options allow to safely hold and maintain the positioning of the hollow bodies 150-1, ..., 150-14 and, hence, the heating structures 141-1, ..., 141-14 in the heat storage material 115.

Corresponding openings are formed in the thermally insulating wall 118 (and the housing of the fluid reactor device 200) to hold the tubes forming the hollow bodies 150-1, ..., 150-14 in the thermally insulating wall 118. In the example of Fig. 2, the tubes forming the hollow bodies 150-1, ..., 150-14 extend through the openings such that the respective interior and, hence, the heating structures 141-1, ..., 141-14 is/are accessible from outside the heat-transfer bed 110 (outside the fluid reactor device 200).

The respective ends of the tubes forming the hollow bodies 150-1, ..., 150-14 may be reversibly sealed with heat-insulating material to avoid or at least minimize heat losses to the environment.

It is to be noted that the tubes forming the hollow bodies 150-1, ..., 150-14 need not extend through the openings in the thermally insulating wall 118 (and the housing of the fluid reactor device 200). In other examples, the tubes forming the hollow bodies 150-1, ..., 150-14 may only extend into the openings but not through the openings. In still other examples, the tubes forming the hollow bodies 150-1, ..., 150-14 may be held at the thermally insulating wall 118 and not extend into the openings in the thermally insulating wall 118. In both cases, the respective interior and, hence, the heating structures 141-1, ..., 141-14 is/are nevertheless accessible from outside the heat-transfer bed 110 (outside the fluid reactor device 200) via the openings in the thermally insulating wall 118. Analogously to what is described above, the openings in the thermally insulating wall 118 may be reversibly sealed with heat insulating material to avoid or at least minimize heat losses to the environment. Additionally or alternatively, the respective ends of the tubes forming the hollow bodies 150-1, ..., 150-14 may be reversibly sealed with heat-insulating material.

As indicated in Fig. 2 for the heating structure 141-11 arranged in the tube forming the hollow body 150-11, one or more (e.g., all) of the heating structures 141-1, ..., 141-14 may be arranged removably in the corresponding tubes forming the hollow bodies 150-1, ..., 150-14. In other words, at least part of the heat source 140 is removably arranged in the hollow bodies 150-1, ..., 150-14. Removably arranging the heating structures 141-1, ..., 141-14 in the hollow bodies 150-1, ..., 150-14 allows not only to easily access the heating structures 141-1, ..., 141-14, but also to easily remove the heating structures 141-1, ..., 141-14 from the fluid reactor device 200 for inspection, maintenance, etc. In particular, the heat source 140 or parts thereof may be removed from the fluid reactor device 200 without removing heat storage material 115 from the heat-transfer bed 110.

In the example of Fig. 2, the tubes forming the hollow bodies 150-1, ..., 150-14 are arranged in the central plane of the heat-transfer bed 110 such that the distances of the hollow bodies 150-1, ..., 150-14 to the first and second openings 111 and 112 along the thickness direction of the heat storage material 115/heat-transfer bed 110 are (substantially) equal. However, the present disclosure is not limited thereto. For example, the tubes forming the hollow bodies 150-1, ..., 150-14 may alternatively be arranged in two or more planes. The hollow bodies 150-1, ..., 150-14 may, e.g., be alternatingly arranged in two or more planes. Furthermore, the hollow bodies 150-1, ..., 150-14 need not be arranged in the central plane. For example, the hollow bodies 150-1, ..., 150-14 may be arranged in the vicinity of the central plane of the heat-transfer bed 110 such as above and/or below the central plane of the heat-transfer bed 110. In particular, the hollow bodies 150-1, ..., 150-14 may be arranged in a region between 25 % and 75 % of the thickness of the heat-transfer bed 110. That is, a respective perpendicular distance of the hollow bodies 150-1, ..., 150-14 to the central plane may be 25 % or less of the thickness of the of the heat-transfer bed 110. On the other hand, a respective perpendicular distance of the hollow bodies 150-1, ..., 150-14 to the nearest one of the first opening 111 and the second opening 112 may be 25 % or more of the thickness of the of the heat-transfer bed 110.

According to some examples of the present disclosure, catalyst material for lowering a reaction temperature of the fluid 101 may be arranged within the heat-transfer bed 110. Accordingly, the needed temperature for the reaction of the fluid 101 (e.g., oxidation or rection) may be lower such that the fluid reactor device 200 may operate at lower temperatures. For example, one or more layer of catalyst material may be provided separate from the heat storage material 115. One or more layer of catalyst material may, e.g., be attached to one or both ends of the heat-transfer bed 110 along the (possible) flow directions of the fluid (e.g., near the first opening 111 and the second opening 112). Alternatively or additionally, the heat storage material 115 in the heat-transfer bed 110 (e.g., cordierite) may at least in part be coated with and/or comprise (contain) catalyst material or catalytically active components. Further alternatively or additionally, catalyst material may be admixed to the heat storage material 115 in the heat-transfer bed 110. Still further alternatively or additionally, a first part of the heat storage material 115 in the heat-transfer bed 110 may be coated with and/or comprise (contain) catalyst material or catalytically active components, whereas a second part of the heat storage material 115 in the heat-transfer bed 110 does not comprise catalyst material and catalytically active components. The first part and the second part of the heat storage material 115 may be admixed or be provided as different layers in the heat-transfer bed 110. For example, one or more oxidation catalysts and/or one or more reduction catalysts may be used. However, the present disclosure is not limited thereto. Also other types of catalysts may be used.

In case the fluid reactor device 200 is a fluid purification device, the fluid purification device may, e.g., purify the fluid 101 by Regenerative Thermal Oxidation (RTO). In other examples of the present disclosure, the fluid purification device may purify the fluid 101 by Regenerative Catalytic Oxidation (RCO). For example, the fluid purification device may be configured to purify the fluid 101 by flameless RTO or flameless RCO. However, the present disclosure is not limited thereto. Also other reactions of the fluid 101 such as a reduction of fluid may be used.

Each of the first plenum 120 and the second plenum 130 comprises a respective housing 121, 131 attached to the heat-transfer bed 110 such that the respective volume enclosed by the respective housing 121, 131 forms a respective plenum space for alternatingly transporting the fluid 101 towards and transporting the reacted fluid 101' away from the heat-transfer bed 110. The housing 121 of the first plenum 120 may according to examples of the present disclosure at least partly be formed of and/or be at least partly covered by a heat-insulating material to minimize heat loses over the housing 121 of the first plenum 120. Analogously, the housing 131 of the second plenum 130 may according to examples of the present disclosure at least partly be formed of and/or be at least partly covered by a heat-insulating material to minimize heat loses over the housing 131 of the second plenum 130.

The first plenum 120 and the second plenum 130 may alternatingly be coupled to a respective one of a source providing/emitting the fluid 101 (e.g., a device such as a machine or a production facility emitting the fluid 101) and a receiver of the reacted fluid 101' (e.g., a chimney for releasing the reacted fluid 101' to the environment or another device or system for further treating the reacted fluid 101') by a fluid distribution system 160. The fluid distribution system 160 is fluidly coupled between an inlet for the fluid 101 (not illustrated in Fig. 2) and each of the first plenum 110 and the second plenum 120. The inlet is configured to receive the fluid 101 from a source. The fluid distribution system 160 is configured to fluidly couple the inlet either to the first plenum 120 or the second plenum 130. For example, during the time period in which the first plenum 120 is configured to supply the fluid 101 to the heat-transfer bed 110, the fluid distribution system 160 is configured to fluidly couple the inlet to the first plenum 120 (and not to the second plenum 130) such that the fluid 101 (e.g., exclusively, only) flows through the first plenum 120 to the heat-transfer bed 110. Analogously, during the time period in which the second plenum 130 is configured to supply the fluid 101 to the heat-transfer bed 110, the fluid distribution system 160 is configured to fluidly couple the inlet 180 to the second plenum 130 (and not to the first plenum 120) such that the fluid (e.g., exclusively, only) flows through second plenum 130 to the heat-transfer bed 110. The fluid distribution system 160 may, e.g., comprise two valves for providing the above described functionality. Furthermore, the fluid distribution system 160 is configured to fluidly couple an outlet for the reacted fluid 101' (not illustrated in Fig. 2) to the one of the first plenum 120 and the second plenum 120 which is currently not fluidly coupled to the inlet 180. That is, during a time period in which the second plenum 130 is configured to supply the fluid 101 to the heat-transfer bed 110, the fluid distribution system 160 is configured to fluidly couple the outlet to the first plenum 120. Analogously, during a time period in which the first plenum 120 is configured to supply the fluid 101 to the heat-transfer bed 110, the fluid distribution system 160 is configured to fluidly couple the outlet to the second plenum 130.

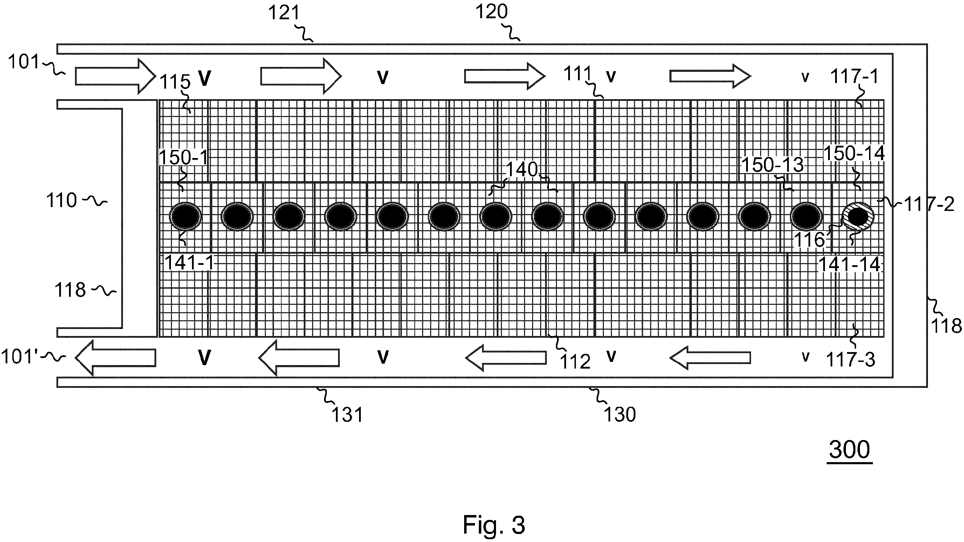

It is to be noted that the present disclosure is not limited to fluid reaction devices using bulk heat storage material. **Fig. 3** illustrates a sectional view of another fluid reaction device 300 using exclusively (only) block shaped heat storage material. The fluid reaction device 300 comprises a heat-transfer bed 110, a first plenum 120 and a second plenum 130 as described above. Fig. 3 illustrates the fluid reactor device 300 during a time period in which the first plenum 120 is configured to supply the fluid 101 to the heat-transfer bed 110. In contrast to the fluid reaction device 200 described above, the heat-transfer bed 110 comprises (e.g., is filled with) block shaped heat storage material 115 rather than bulk heat storage material.

In the example of Fig. 3, the heat storage material 115 comprises at least a first layer 117-1, a second layer 117-2 and a third layer 117-3 arranged in sequence between the first opening 111 and the second opening 112. Each of the first, the second and the third layer 117-1, ... 117-3 is formed of block shaped heat storage material. The second layer 117-2 is formed of different block shaped heat storage material than the first and the third layer 117-1 and 117-3. In other words, the layers 117-1, 117-2 and 117-3 of block shaped heat storage material are not identical to each other. It is to be noted that the number of layers is selected for illustrative purposes only. Any number K ≥ 1 of layers formed of block shaped heat storage material may be used.

Recesses are provided in at least part of the block shaped heat storage material in the second layer 117-2 to form 14 hollow bodies 150-1, ..., 150-14 for arranging at least part of the heat source 140. In other words, blocks of heat storage material in the second layer 117-2 exhibiting recesses form the hollow bodies 150-1, ..., 150-14. Analogously to what is described above, the heat source 140 comprises 14 heating structures 114-1, ..., 114-14 which are arranged in the hollow bodies 150-1, ..., 150-14. However, it is to be noted that any other number L ≥ 1 of heating structures and/or hollow bodies may be used.

The recesses forming the hollow bodies 150-1, ..., 150-14 may be recesses already (anyway) existing in the block shaped heat storage material or be dedicatedly formed for accommodating the heat source 140. Due to the block shape of the heat storage material 115, the positioning and the shape of the recesses and, hence, the formed hollow bodies 150-1, ..., 150-14 remains unchanged (constant) over time.

Two options for arranging the heating structures 114-1, ..., 114-14 and, hence, at least part of the heat source 140 in the recesses forming hollow bodies 150-1, ..., 150-14 are exemplarily illustrated in Fig. 3. The first option is illustrated for the recesses forming the hollow bodies 150-1, ..., 150-13, the second option is illustrated for the recess(es) forming the hollow body 150-14.

The heating structures 114-1, ..., 114-13 are directly arranged in the recesses forming hollow bodies 150-1, ..., 150-13 without protective tubes, whereas a tube 116 is arranged in the recess(es) forming the hollow body 150-14 to protect the heating structure 114-14. The heating structure 114-14 is arranged in the tube 116.

Analogously to what is described above, one or more of the heating structures 141-1, ..., 141-14 may be arranged removably in the corresponding hollow bodies 150-1, ..., 150-14 and, if a respective tube is arranged in the one or more of the hollow bodies 150-1, ..., 150-14, one or more of the heating structures 141-1, ..., 141-14 may be arranged removably in the corresponding tube. The respective tube may be formed of multiple pieces or be formed integrally.

The hollow bodies 150-1, ..., 150-14 formed by the recesses in the block shaped heat storage material are accessible from outside the heat-transfer bed. Although not illustrated in Fig. 3, corresponding openings may be formed in the thermally insulating wall 118 (and the housing of the fluid reactor device 200) at the positions of the hollow bodies 150-1, ..., 150-14. Accordingly, the respective interior and, hence, the heating structures 141-1, ..., 141-14 is/are accessible from outside the heat-transfer bed 110 (outside the fluid reactor device 200). In case a respective tube such as the tube 116 illustrated in Fig. 3 is arranged in one or more of the recesses forming the hollow bodies 150-1, ..., 150-14, the tube may extend into or extend through the respective opening analogously to what is described above (i.e., one or more tube may be held in the thermally insulating wall 118). However, it is to be noted that a respective tube such as the tube 116 illustrated in Fig. 3 need not extend into the respective opening (optionally, the respective tube may be held at the thermally insulating wall 118).

Analogously to what is described above, the openings in the thermally insulating wall 118 and/or respective ends of tubes in the hollow bodies 150-1, ..., 150-14 may be reversibly sealed with heat insulating material to avoid or at least minimize heat losses to the environment.

It is to be noted that the fluid reactor device 300 may optionally further comprise a fluid distribution system as described above.

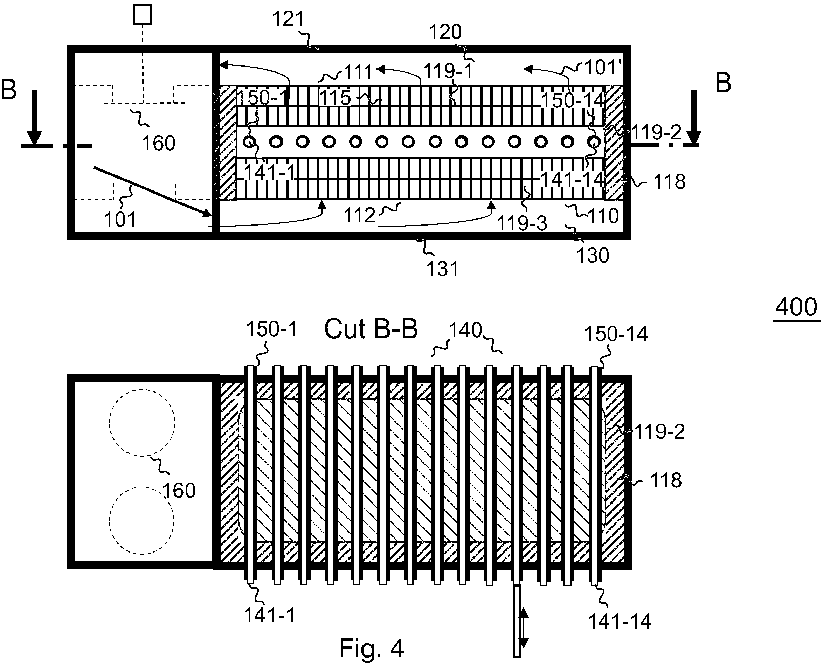

**Fig. 4** illustrates another fluid reactor device 400 using bulk heat storage material and block shaped heat storage material for the heat-transfer bed. The upper part of Fig. 4 illustrates a sectional view of the fluid reactor device 400. The lower part of Fig. 4 illustrates another sectional view of the fluid reactor device 400 along the sectional line B-B illustrated in the upper part of Fig. 4. Fig. 4 illustrates the fluid reactor device 400 during a time period in which the second plenum 130 is configured to supply the fluid 101 to the heat-transfer bed 110.

Like the fluid reactor device 300 described above, the heat storage material 115 comprises at least a first layer 119-1, a second layer 119-2 and a third layer 119-3 arranged in sequence between the first opening 111 and the second opening 112. However, unlike in the fluid reactor device 300, the second layer 119-2 is formed of bulk shape heat storage material. Only, the first and the third layer 117-1, 117-3 are each formed of block shaped heat storage material.

Analogously to what is described above for the fluid reactor device 200, the heating structures 141-1, ..., 141-14, i.e., the heat source 140, are/is arranged in 14 hollow bodies 150-1, ..., 150-14. The hollow bodies 150-1, ..., 150-14 are arranged in the bulk heat storage material of the second layer 119-2 such that their respective interior is accessible from outside the heat-transfer bed 110. Also in the example of Fig. 4, the hollow bodies 150-1, ..., 150-14 are tubes arranged (embedded) in the bulk heat storage material 115. The respective tube may be formed of multiple pieces or be formed integrally. As illustrated in Fig. 4, corresponding openings are formed in the thermally insulating wall 118 (and the housing of the fluid reactor device 400) at the positions of the hollow bodies 150-1, ..., 150-14. Accordingly, the respective interior and, hence, the heating structures 141-1, ..., 141-14 is/are accessible from outside the heat-transfer bed 110 (outside the fluid reactor device 200).

Analogously to what is described above, the openings in the thermally insulating wall 118 and/or respective ends of the tubes forming the hollow bodies 150-1, ..., 150-14 may be reversibly sealed with heat insulating material to avoid or at least minimize heat losses to the environment.

As indicated in Fig. 4 for the heating structure 141-11 arranged in the tube forming the hollow body 150-11, one or more of the heating structures 141-1, ..., 141-14 may be arranged removably in the corresponding tubes forming the hollow bodies 150-1, ..., 150-14 - analogously to what is described above.

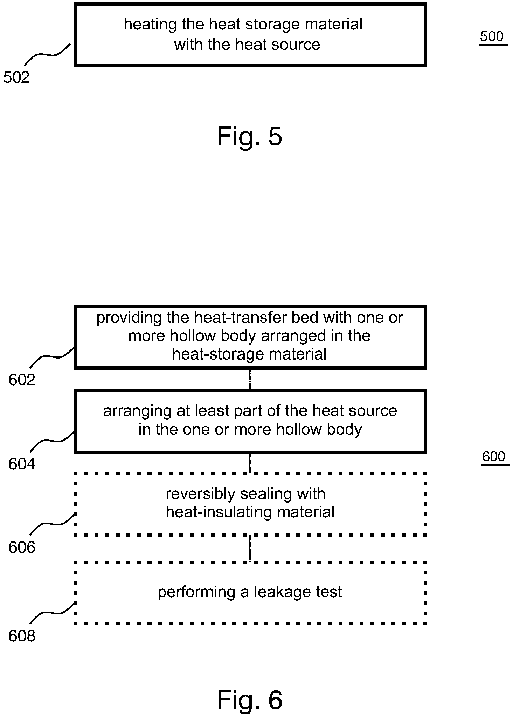

For further illustrating the proposed architecture for fluid reaction processing, **Fig. 5** illustrates a flowchart of a method 500 for operating a fluid reactor device as described herein. The method 500 comprises heating 502 the heat storage material by the heat source to a predefined temperature such that fluid flowing through the heat storage material heats up and reacts while flowing through the heat storage material

Similar to what is described above, the method 500 allows to initially heat the heat storage material to the predefined temperature suitable for thermal reaction of the fluid, and to heat the heat storage material to the predefined temperature during reaction processing of the fluid if needed. Arranging at least part of the heat source in the one or more hollow body allows to easily access the heat source for inspection, maintenance, etc. In particular, arranging at least part of the heat source in the one or more hollow body allows to access the heat source without removing heat storage material from the heat-transfer bed. This not only may simplify inspection, maintenance, etc. of the heat source, but also reduce downtimes of the fluid reactor device since heat storage material need not be removed from the heat-transfer bed. Furthermore, arranging at least part of the heat source in the one or more hollow body may allow to facilitate the installation of the heat source.

More details and aspects of the method 500 are explained in connection with the proposed technique or one or more example described above (e.g., Figs. 1 to 4). The method 500 may comprise one or more additional optional feature corresponding to one or more aspect of the proposed technique, or one or more example described above.

**Fig. 6** further illustrates a flowchart of a method 600 for installing a fluid reactor device as described herein. The method 600 comprises providing 602 the heat-transfer bed with the one or more hollow body arranged in the heat storage material of the heat-transfer bed. Additionally, the method 600 comprises arranging 604 at least part of the heat source in the one or more hollow body.

Similar to what is described above, the method 600 allows to simplify and speed up the installation of the fluid reactor device. As the one or more hollow body are arranged in the heat storage material of the heat-transfer bed, the at least part of the heat source may simply be inserted into the one or more hollow body from the outside of the heat-transfer bed. In particular, the at least part of the heat source may be installed without removing heat storage material from the heat-transfer bed.

More details and aspects of the method 600 are explained in connection with the proposed technique or one or more example described above (e.g., Figs. 1 to 4). The method 600 may comprise one or more additional optional feature corresponding to one or more aspect of the proposed technique, or one or more example described above. For example, one or more opening may be formed in a thermally insulating wall surrounding the heat storage material. At least one of the one or more hollow body may extend through the one or more opening and/or at least one of the one or more hollow body may be accessible via the one or more opening. In this case, the method 600 may further comprise reversibly sealing 606, with heat-insulating material, the one or more opening and/or a respective end of the one or more hollow body extending through or being accessible via the one or more opening. Analogously to what is described above, heat losses over the respective opening or a respective end of the one or more hollow body may be avoided and easy access for maintenance work, etc. may be ensured.

The method 600 may further comprise performing 608 a leakage test (sealing test, tightness test) after arranging 604 at least part of the heat source in the one or more hollow body (either immediately or after one or more intermediate method step is performed). The leakage test allows to test whether the interface(s) between the one or more hollow body and the heat-transfer bed is/are fluid-tight. Performing 608 the leakage test may, e.g., comprise injecting a pressurized test fluid to the interior of the fluid reactor device (e.g., via a respective test fluid port in the heat-transfer bed or another part of the fluid reactor device as described above), and measuring whether the test fluid leaks from the interface(s) between the one or more hollow body and the heat-transfer bed. It is to be noted that the injection of the pressurized test fluid to the interior of the fluid reactor device further allows to test the fluid-tightness of the other components (e.g., the housing) of the fluid reactor device. Accordingly, the leakage test allows to test whether an inside volume (interior) of the fluid reactor device (heat-transfer bed) is sealed against an environment (outside) of the fluid reactor device (heat-transfer bed). As described above, the pressurized test fluid may be a pressurized gas such as pressurized air.

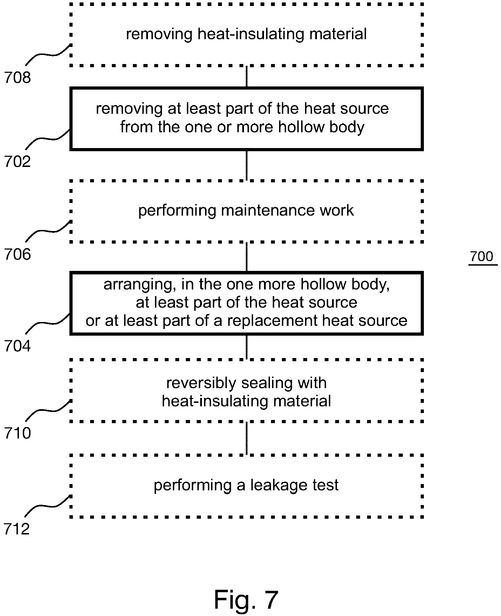

A flowchart of a method 700 for maintaining a fluid reactor device as described herein is illustrated in **Fig. 7****.** The method 700 comprises removing 702 at least part of the heat source from the one or more hollow body for maintenance. Additionally, the method 700 comprises arranging 704, in the one or more hollow body, the at least part of the heat source in the one or more hollow body after maintenance or at least part of a replacement heat source.

Similar to what is described above, the method 700 allows to simplify and speed up the maintenance of the fluid reactor device. For example, the at least part of the heat source may be moved (e.g., pulled) out from the one or more hollow body for maintenance. After maintenance, either the maintained (e.g., checked and repaired) at least part of the heat source is moved back into the one or more hollow body or at least part of a replacement heat source is moved instead into the one or more hollow body. As the one or more hollow body are arranged in the heat storage material of the heat-transfer bed, the removal and the (reinsertion may be performed without removing heat storage material from the heat-transfer bed.

More details and aspects of the method 700 are explained in connection with the proposed technique or one or more example described above (e.g., Figs. 1 to 4). The method 700 may comprise one or more additional optional feature corresponding to one or more aspect of the proposed technique, or one or more example described above.

For example, the method 700 further comprises performing 706 maintenance work on the at least part of the heat source. For example, the maintenance work may comprise checking (testing), at least partly dismantling, repairing, upgrading and/or purifying (cleaning) the at least part of the heat source.

As described above, one or more opening may be formed in a thermally insulating wall surrounding the heat storage material. At least one of the one or more hollow body may extend through the one or more opening and/or at least one of the one or more hollow body may be accessible via the one or more opening. In this case, the method 700 may further comprise removing 708 heat-insulating material from at least one of the one or more opening and/or a respective end of at least one of the one or more hollow body extending through or being accessible via the one or more opening before removing the at least part of the heat source from the one or more hollow body. Alternatively or additionally, the method 700 may comprise reversibly sealing 710, with heat-insulating material, at least one of the one or more opening and/or a respective end of at least one of the one or more hollow body extending through or being accessible via the one or more opening after arranging the at least part of the heat source or the replacement heat source in the one or more hollow body. Analogously to what is described above, heat losses over the respective opening or a respective end of the one or more hollow body may be avoided and easy access for maintenance work, etc. may be ensured.

The method 700 may further comprise performing 712 a leakage test (sealing test, tightness test) after arranging 704, in the one or more hollow body, the at least part of the heat source in the one or more hollow body after maintenance or at least part of the replacement heat source (either immediately or after one or more intermediate method step is performed). The leakage test allows to test whether the interface(s) between the one or more hollow body and the heat-transfer bed is/are fluid-tight. Performing 712 the leakage test may, e.g., comprise injecting a pressurized test fluid to the interior of the fluid reactor device (e.g., via a respective test fluid port in the heat-transfer bed or another part of the fluid reactor device as described above), and measuring whether the test fluid leaks from the interface(s) between the one or more hollow body and the heat-transfer bed. It is to be noted that the injection of the pressurized test fluid to the interior of the fluid reactor device further allows to test the fluid-tightness of the other components (e.g., the housing) of the fluid reactor device. Accordingly, the leakage test allows to test whether an inside volume (interior) of the fluid reactor device (heat-transfer bed) is sealed against an environment (outside) of the fluid reactor device (heat-transfer bed). As described above, the pressurized test fluid may be a pressurized gas such as pressurized air.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A fluid reactor device (100), in particular a fluid purification device, comprising:
a heat-transfer bed (110) comprising heat storage material (115) configured to heat fluid (101) flowing through the heat storage material (115) such that the fluid (101) heats up and reacts while flowing through the heat storage material (115);
a heat source (140) configured to heat the heat storage material (115) to a predefined temperature; and
one or more hollow body (150) arranged in the heat storage material (115), wherein a respective interior of the one or more hollow body (150) is accessible from outside the heat-transfer bed (110), wherein at least part of the heat source (140) is arranged in the one or more hollow body (150).

2. The fluid reactor device (100) of claim 1, wherein the heat storage material (115) comprises bulk heat storage material, and wherein the one or more hollow body (150) are one or more tube arranged in the bulk heat storage material.

3. The fluid reactor device (100) of claim 1, wherein the heat storage material (115) comprises at least one layer of block shaped heat storage material, and wherein recesses in at least part of the block shaped heat storage material form the one or more hollow body (150).

4. The fluid reactor device (100) of claim 3, further comprising one or more tube are arranged in at least part of the recesses forming the one or more hollow body (150), wherein at least part of the heat source (140) is arranged in the one or more tube.

5. The fluid reactor device (100) of any one of claims 2 to 4, wherein the heat-transfer bed (110) comprises a thermally insulating wall (118) surrounding the heat storage material (115), and wherein the one or more tube are held at or in the thermally insulating wall (118).

6. The fluid reactor device (100) of claim 5, wherein a first end of at least one of the one or more tube is held at or in a first part of the thermally insulating wall (118), wherein a second end of the at least one of the one or more tube is held at or in a second part of the thermally insulating wall (118), the first end being opposite to the second end.

7. The fluid reactor device (100) of claim 5, wherein a first end of at least one of the one or more tube is held at or in the thermally insulating wall (118), wherein a second end of the at least one of the one or more tube is a free end not held at or in the thermally insulating wall (118).

8. The fluid reactor device (100) of any one of claims 1 to 7, wherein the one or more hollow body (150) are arranged in a central plane of the heat-transfer bed (110) and/or in a region between 25 % and 75 % of a thickness of the heat-transfer bed (110).

9. The fluid reactor device (100) of any one of claims 1 to 8, wherein one or more opening are formed in a thermally insulating wall (118) surrounding the heat storage material (115), wherein at least one of the one or more hollow body (150) and/or one or more tube arranged in at least part of the one or more hollow body (150) extends through the one or more opening and/or at least one of the one or more hollow body (150) is accessible via the one or more opening.

10. The fluid reactor device (100) of claim 9, wherein the one or more opening is reversibly sealed with heat insulating material, wherein a respective end of the one or more hollow body (150) extending through or being accessible via the one or more opening is reversibly sealed with heat-insulating material, and/or wherein the one or more tube arranged in at least part of the one or more hollow body (150) and extending through the one or more opening is reversibly sealed with heat-insulating material.

11. The fluid reactor device (100) of any one of claims 1 to 10, wherein the at least part of the heat source (140) is removably arranged in the one or more hollow body (150).

12. The fluid reactor device (100) of any one of claims 1 to 11, wherein the heat source (140) is an electrical heater.

13. The fluid reactor device (100) of any one of claims 1 to 11, wherein the heat source (140) is one of a combustion heater and a stream of hot fluid.

14. The fluid reactor device (100) of any one of claims 1 to 13, further comprising:
a first plenum (120) fluidly coupled to a first opening (111) of the heat-transfer bed (110);
a second plenum (130) fluidly coupled to a second opening (112) of the heat-transfer bed (110),
wherein the first plenum (120) and the second plenum (130) are configured to alternatingly supply the fluid (101) to the heat-transfer bed (110) such that the fluid (101) heats up and reacts while flowing through the heat storage material (115);
wherein, during a time period in which one of the first plenum (120) and the second plenum (130) is configured to supply the fluid (101) to the heat-transfer bed (110), the other one of the first plenum (120) and the second plenum (130) is configured to drain the fluid (101') from the heat-transfer bed (110).

15. A method (500) for operating a fluid reactor device according to any one of claims 1 to 14, the method (500) comprising:
heating (502) the heat storage material with the heat source to a predefined temperature such that fluid flowing through the heat storage material heats up and reacts while flowing through the heat storage material.

16. A method (600) for installing a fluid reactor device according to any one of claims 1 to 14, the method (600) comprising:
providing (602) the heat-transfer bed with the one or more hollow body arranged in the heat storage material of the heat-transfer bed; and
arranging (604) at least part of the heat source in the one or more hollow body.

17. A method (700) for maintaining a fluid reactor device according to any one of claims 1 to 14, the method (700) comprising:
removing (702) at least part of the heat source from the one or more hollow body for maintenance; and
arranging (704), in the one or more hollow body, the at least part of the heat source in the one or more hollow body after maintenance or at least part of a replacement heat source.

18. The method (700) of claim 17, further comprising:
performing (706) maintenance work on the at least part of the heat source.

19. The method (700) of claim 17 or claim 18, wherein one or more opening are formed in a thermally insulating wall surrounding the heat storage material, wherein at least one of the one or more hollow body extends through the one or more opening and/or at least one of the one or more hollow body is accessible via the one or more opening, the method (700) further comprising:
removing (708) heat-insulating material from at least one of the one or more opening and/or a respective end of at least one of the one or more hollow body extending through or being accessible via the one or more opening before removing the at least part of the heat source from the one or more hollow body; and/or
reversibly sealing (710), with heat-insulating material, at least one of the one or more opening and/or a respective end of at least one of the one or more hollow body extending through or being accessible via the one or more opening after arranging the at least part of the heat source or the replacement heat source in the one or more hollow body.
